# EUROPEAN PATENT SPECIFICATION

(11) **EP 4 260 957 B1**
(45) Date of publication and mention of the grant of the patent: **01.07.2026**
(21) Application number: 22168090.3
(22) Date of filing: 13.04.2022
(51) Int. Cl.: B09B 3/21

(54) **METHOD FOR RECYCLING MINERAL WOOL MATERIAL**
VERFAHREN ZUM RECYCLING VON MINERALWOLLMATERIAL
PROCÉDÉ DE RECYCLAGE DE MATÉRIAU EN LAINE MINÉRALE

(43) Date of publication of application: 18.10.2023
(73) Proprietor: Saint-Gobain Ecophon AB, 260 61 Hyllinge (SE)
(72) Inventor: BORGSTRÖM, Johan, 224 57 Lund (SE); HOOSHMAND, Saleh, 254 73 Ödåkra (SE); HERLUISON, Anaîs, 254 34 Helsingborg (SE)
(74) Representative: AWA Sweden AB

(56) References cited:
- JP-A- H10 279 336

## Description

### Field of the invention

The present invention relates to a method for recycling mineral wool material.

### Background art

Elements comprising mineral wool may be used for a variety of purposes. For instance, the elements comprising mineral wool such as glass or stone wool may constitute acoustical panel elements and may be formed as horizontally arranged ceiling tiles, vertically arranged baffle elements, wall mounted elements or free standing screens. Alternatively, the elements may be formed as thermal insulation elements.

The use of elements comprising mineral wool results in the generation of considerable amounts of waste.

The waste may be generated during manufacturing of the elements comprising mineral wool and may comprise rejected elements or removed sections during shaping of the elements.

Waste may also be generated during installation of a system of elements comprising mineral wool. The waste at this stage may comprise sections removed from elements during trimming or elements remaining after completed installation.

Finally, waste may be generated after end of life when the system of elements comprising mineral wool is demounted.

Conventionally, waste in the form of elements comprising mineral wool generated during manufacturing, installation or demounting after end of life has been difficult to recycle in an efficient manner. Most commonly, the waste goes to landfills.

Due to the low bulk density of mineral wool, such recycling causes high management costs and significant environmental impacts. Besides, some of the mineral wool contains a phenolic binder, causing a risk for the leaching water from landfills to contain harmful substances.

Some efforts have been made find alternative ways for recycling mineral wool (such as supplementary cementitious materials (SCMs) or as the geopolymer precursors). However, the current utilization amount is still rather limited.

JPH10279336A discloses a method for recycling waste such as concrete, rock wool, timber chips, etc, in particularly on site from waste generated from demolished buildings. The method comprises recovering, sorting and pulverizing the waste. The powder material is then mixed with a binder for obtaining a mixture which is press moulded into building material products.

### Summary of the invention

The object of the present invention is to provide an improved method for recycling mineral wool material. The mineral wool material may be waste in the form of elements comprising mineral wool generated during manufacturing, installation or demounting after end of life.

A further object is to provide such a method enabling cost efficient production of tile shaped elements of the recycled mineral wool material.

To achieve at least one of the above objects and also other objects that will be evident from the following description, a method having the features defined in claim 1 is provided according to the present invention. Preferred embodiments will be evident from the dependent claims.

More specifically, there is provided according to a first aspect of the present invention a method for recycling mineral wool material, comprising fragmentizing the mineral wool material for obtaining a fragmentised mineral wool material, wetting the fragmentised mineral wool material with a liquid comprising alkaline activators for obtaining a wetted mineral wool material, removing excess liquid from the wetted mineral wool material for obtaining a semi-dried mineral wool material, moulding the semi-dried mineral wool material into a tile shaped element, and curing the tile shaped element.

Hereby, an improved method for recycling mineral wool material is provided enabling cost efficient production of tile shaped element.

Fragmentizing of the mineral wool material may be carried out at a high production rate by means of for instance a shredding device, a cutting device, a hammer mill device or the like. It is also conceivable to use a combination of devices for the fragmentizing of the mineral wool material, such as fragmentizing by means of a shredding device and followed by fragmentizing by means of a hammer mill device.

By wetting the fragmentized mineral wool material with the liquid comprising alkaline activators and removal of excess liquid, a semi-dried mineral wool material is obtained suitable for handling in a moulding operation.

The semi-dried mineral wool material is thus obtained by removal of excess liquid comprising alkaline activators. The semi-dried mineral wool material may have a weight ratio between mineral wool material and liquid comprising alkaline activators in the range of 1:1-2.

The subsequent curing step after moulding is enabled by the alkaline activators causing geopolymerization on the surface of the fibres of the mineral wool material, thereby forming a solid binder holding the tile shaped element together.

The alkaline activators may be present in such amount that some parts of the ackaline activators remain after completed geopolymerization. These parts of the alkaline activators may be configured to act as a binder after curing.

The mineral wool material may be obtained in the form of waste generated during manufacturing, installation and/or demounting after end of life of elements comprising mineral wool. Hereby recycling is enabled of a type of waste which conventionally is difficult to recycle.

According to an embodiment, the mineral wool material may be fragmentized to fragments of non-uniform shape and/or having an average piece size in the range of 10x10x10 mm to 50x50x50 mm.

According to another embodiment, the step of wetting the fragmentised mineral wool material may be carried out in a wetting operation comprising immersion, spraying and/or tumbling. The type of wetting operation may be chosen dependent on the desired degree of wetting to be achieved. Immersion may be suitable for obtaining a fully wetted or soaked mineral wool material, spraying may be suitable for obtaining a moderately wetted mineral wool material, and tumbling may be suitable for obtaining a medium wetted mineral wool material

According to yet another embodiment, the liquid comprising alkaline activators may be an aqueous solution. The alkaline activators may be selected from the group consisting of NaOH, Ca(OH)₂, KOH, Na_{2y}Si_{y}O_{2y+x} (such as Na₂SiO₃), K_{2y}Si_{y}O_{2y+x} (such as K₂SiO₃).

According to yet another embodiment, the step of removing excess liquid from the wetted mineral wool material may be carried out in an drying operation comprising draining, pressing, centrifugation, vacuum and/or heating.

According to yet another embodiment, the method may further comprise adding metakaolin. The metakaolin may be mixed with the liquid comprising alkaline activators. Additionally or alternatively, the metakaolin may be added to the fragmentised mineral wool material, to the wetted mineral wool material and/or to the semi-dried mineral wool material, for instance by sprinkling. According to an embodiment, the method may also comprise a step in which the semi-dried mineral wool material is subjected to a fibre separation operation, and in such a case the metakaolin may be added to the semi-dried mineral fibre material during said fibre separation operation. By adding metakaolin, the reactivity of the geopolymerization process may be improved in order to achieve a better adhesion between the fibres of the mineral wool material after completed curing.

According to yet another embodiment, the step of moulding the semi-dried mineral wool material may comprise compacting the semi-dried mineral wool material such that the tile shape element obtains a density after curing in the range of 90 - 400 kg/m³.

According to yet another embodiment, the step of curing the tile shaped element may be performed at a temperature in the range of 20 - 80°C.

According to yet another embodiment, a mould may be used for performing the step of moulding the semi-dried mineral wool material.

According to yet another embodiment, the step of moulding the semi-dried mineral wool material may comprise arranging a first layer of a mixture comprising wood wool, milled mineral wool and an activated alkaline component in a mould, and subsequently arranging on top of the first layer a second layer comprising the semi-dried mineral wool material. The milled mineral wool may be obtained from recycled mineral wool material.

According to yet another embodiment, the semi-dried mineral wool material may be subjected to fibre separation operation prior to the step of moulding the semi-dried mineral wool material. Hereby the semi-dried mineral wool material may become sufficiently fluffy or voluminous to enable controlled compacting during the subsequent moulding step in order to achieve a desired density of the completed tile shaped element. The fibre separation operation may be performed by means of an air blow device, a carding device or a hammer mill device.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a flowchart showing different steps of a method for recycling mineral wool material.
Fig. 2 is a perspective view of a tile shaped element comprising a first and a second layer.
Fig. 3 is a view schematically illustrating different steps in an embodiment of a method for recycling mineral wool material.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

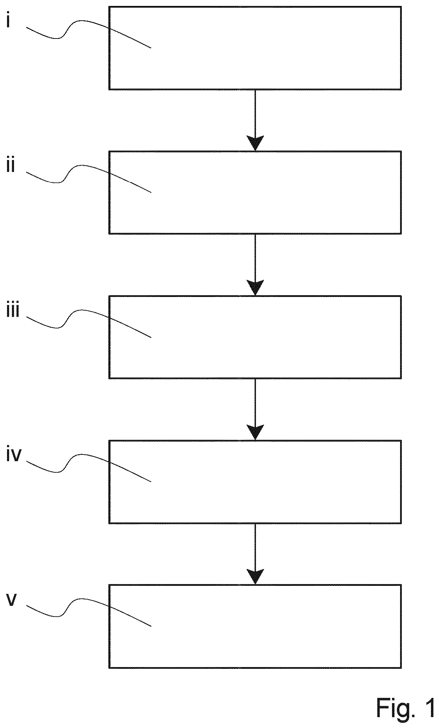

Fig. 1, to which now reference is made, is a flowchart of an embodiment according to the present invention of a method for recycling mineral wool material.

The mineral wool material may be obtained if the form of waste generated during manufacturing, installation and/or demounting after end of life of elements comprising mineral wool. The elements may for instance be acoustical ceiling tiles comprising mineral wool.

The mineral wool material may be glass wool or stone wool.

The method comprises the following steps:
(i) fragmentizing the mineral wool material for obtaining a fragmentised mineral wool material,
(ii) wetting the fragmentised mineral wool material with a liquid comprising alkaline activators for obtaining a wetted mineral wool material,
(iii) removing excess liquid from the wetted mineral wool material for obtaining a semi-dried mineral wool material,
(iv) moulding the semi-dried mineral wool material into a tile shaped element, and
(v) curing the tile shaped element.

In step (i), the mineral wool is shredded or fragmentised into fragments or pieces for obtaining a fragmentised mineral wool material.

When the mineral wool material is shredded or fragmentised, the mineral wool material may be converted by shredding, cutting or the like into fragments or pieces of non-uniform size and shape.

The fragments may have an average piece size in the range of 10x10x10 mm to 50x50x50 mm.

Step (i) may be performed by means of a shredding device, a cutting device or a hammer mill device. The shredding device, the cutting device or the hammer mill device may be configured for handling mineral wool material provided in the form of panels or tiles.

In step (ii), the fragmentised mineral wool material is wetted with a liquid comprising alkaline activators for obtaining a wetted mineral wool material.

The step (ii) may be carried out in a wetting operation comprising immersion, spraying, tumbling or a combination thereof.

In a wetting operation comprising immersion, the fragmentised mineral wool material may be immersed into a volume of the liquid comprising alkaline activators. The volume of the liquid may be housed in a tank or the like.

In a wetting operation comprising spraying, the liquid may be supplied to the fragmentised mineral wool by means of nozzles or the like.

In a wetting operation comprising tumbling, the fragmentised mineral wool material may be arranged inside a rotatable chamber together with the liquid, and by subsequent rotation of the chamber.

The liquid comprising alkaline activators may be an aqueous solution, i.e. a solution comprising water.

The alkaline activators may be selected from the group consisting of NaOH, Ca(OH)₂, KOH, Na_{2y}Si_{y}O_{2y+x} (such as Na₂SiO₃), K_{2y}Si_{y}O_{2y+x} (such as K₂SiO₃).

In step (iii), excess liquid is removed from the wetted mineral wool for obtaining a semi-dried mineral wool material.

The step (iii) may be carried out in an drying operation comprising draining, pressing, centrifugation, vacuum and/or heating, or a combination thereof.

In an drying operation comprising draining, the wetted mineral wool material may be arranged on a surface configured for allowing excess liquid to be drained.

In an drying operation comprising pressing, a compression device may be used configured to compact the wetted mineral wool material for pressing out excess liquid.

In an drying operation comprising centrifugation, a rotatable dryer may be used. The wetted mineral wool material is arranged inside the rotatable dryer, and by rotating the dryer excess liquid is expelled from the wetted mineral wool.

In an drying operation comprising vacuum, a device using vacuum may be used for extracting excess liquid from the wetted mineral wool.

In an drying operation comprising heating, a heating device configured to heat the wetted mineral wool material for removal of excess liquid by means of evaporation.

The semi-dried mineral wool material may have a weight ratio between mineral wool material and liquid comprising alkaline activators in the range of 1:1-2.

In step (iv), the semi-dried mineral wool material is moulded into a tile shaped element or into a plurality of tile shaped elements.

A mould may be used in step (iv). The mould comprises side walls for defining the side edges of the moulded tile shaped element. The mould may also comprise a bottom wall defining the bottom surface of the moulded tile shape element. Alternatively, the mould may be provided with an open bottom such that the bottom surface of the moulded tile shaped element is defined by the structure upon which the mould is arranged. The mould may further comprise a removable top wall which may be placed on top of the semi-dried mineral wool material once it has been arranged inside the mould.

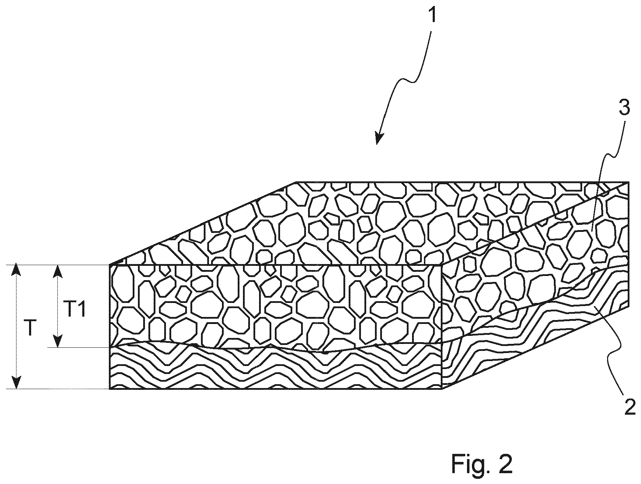

The step (iv) of moulding the semi-dried mineral wool material may further comprise arranging a first layer of a mixture comprising wood wool, milled mineral wool and an alkaline activator component in a mould, and subsequently arranging on top of the first layer a second layer comprising the semi-dried mineral wool material. A tile shaped element 1 comprising such a first 2 and second layer 3 is schematically illustrated in Fig. 2.

The milled mineral wool may be obtained from recycled mineral wool material. The mixture forming the first layer may have a weight ratio between wood wool and milled mineral wool in the range of 1:1-5. The alkaline activator component will when activated initiate a geopolymerization process together with the milled mineral wool for forming a binder in the wood wool. The alkaline activator component may be activated by means of water. The alkaline activator component may be provided as an aqueous solution.

The second layer 3 may have a thickness T1 corresponding to between 50 - 90% or the total thickness T of the composite tile shaped element 1 comprising said first and second layer 2, 3.

In step (v), the tile shaped element is cured.

Step (v) may be performed while the tile shaped element is placed inside the mould. Alternatively, the tile shaped element may be removed from the mould before becoming fully cured.

The tile shaped element may be compacted or compressed during the step (v) of curing such that the tile shaped element obtains a density in the range of 90- 400 kg/m³ after curing. If the tile shaped element is cured inside a mould having a removable top wall, the top wall may be pressed against the tile shaped element for achieving the compression.

The curing step (v) may be performed at a temperature in the range of 20 - 80 °C.

During the step (v) of curing, a geopolymerization process takes place in the semi-dried mineral wool material. More specifically, the remaining liquid comprising alkaline activators causes geopolymerization on the surfaces of the fibres of the mineral wool material to form a solid binder. For instance, geopolymerization may occur at ambient or slightly elevated temperature, where the leaching of solid aluminosilicate raw materials in alkaline solutions leads to the transfer of leached species from the solid surfaces into a growing gel phase, followed by nucleation and condensation of the gel phase to form a solid binder.

The liquid comprising alkaline activators may be present in the semi-dried mineral wool material in such amount that a part of the liquid still remains after completed geopolymerization. This remaining part of the liquid may be configured to form a binder in itself after completed curing.

When using an alkaline activator such as waterglass, the curing may be carried out in an CO₂ enriched environment for facilitating the curing process.

According to an embodiment of the invention, the method may further comprise the step of adding metakaolin.

Metakaolin is the anhydrous calcined form of the clay mineral kaolinite and may be added to the process when appropriate. The metakaolin may be provided in powder form.

For instance, the metakaolin may be mixed with the liquid comprising alkaline activators before wetting the fragmentized mineral wool material with the liquid. Additionally or alternatively, the metakaolin may be added to the fragmentized mineral wool material, to the wetted mineral wool material and/or to the semi-dried mineral wool material.

The metakaolin may be added with a weight ratio in relation to the mineral wool material (dry weight) in the range 1:5-100.

By adding metakaolin, the reactivity of the geopolymerization process may be improved thereby achieving a better adhesion between the fibres of the mineral wool material after completed curing.

According to another embodiment of the invention, the method may further comprise the step of subjecting the semi-dried mineral wool material to a fibre separation operation prior to the step (iv) of moulding the semi-dried mineral wool material. Hereby the semi-dried mineral wool material may become sufficiently fluffy or voluminous to enable controlled compacting during the subsequent moulding step in order to achieve a desired density of the completed tile shaped element. The fibre separation operation may be performed by means of an air blow device, a carding device or a hammer mill device. If metakaolin is added, the metakaolin may added to the semi-dried mineral wool material during the fibre separation operation.

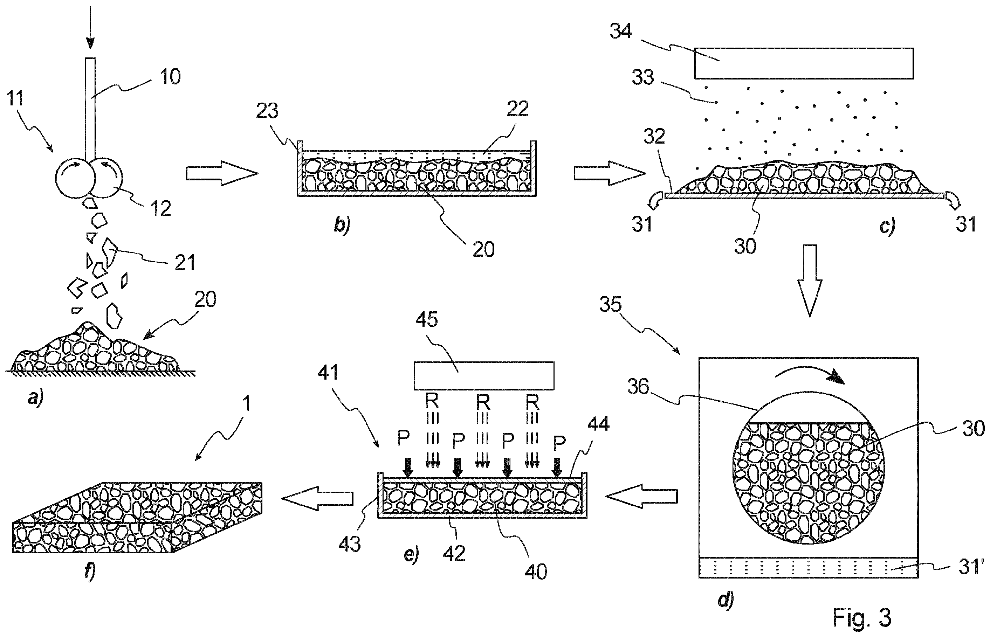

In Fig.3, to which reference now is made, steps a)-f) of an embodiment of a method according to the invention is schematically illustrated.

In step a), mineral wool material 10 provided in the form of a tile is fragmentised for obtaining a fragmentised mineral wool material 20 by means of a shredding device 11 comprising two opposed sets of rotatable cutting blades 12. The mineral wool material 10 is inserted between the two opposed sets of rotatable cutting blades 12 which during operation engages the mineral wool material 10 for fragmentizing thereof. The shredding device 11 is configured for producing fragments 21 having a non-uniform size and shape, and the average size of the fragments 21 may be in the range of 10x10x10 - 50x50x50 mm.

In step b), the fragmentised mineral wool material 20 is wetted with a liquid 22 comprising alkaline activators for obtaining a wetted mineral wool material 30. The liquid 22 may for instance be Na₂SiO₃ (water glass). In the shown embodiment, step b) is carried out by the fragmentised mineral wool 20 being immersed into a bath 23 containing the liquid 22.

In steps c) and d), excess liquid 31 is removed from the wetted mineral wool material 30 for obtaining a semi-dried mineral wool material 40.

More specifically, in step c) the wetted mineral wool 30 material is arranged on a surface 32 configured for removal of the excess liquid 31 by draining. The surface 32 may be provided with perforations (not shown) for further facilitating the draining.

Also, in step c) metakaolin 33 is added. In the shown embodiment, the metakaolin 33 is added by being sprinkled on top of the wetted mineral wool 30 material arranged on the surface 32. The metakaolin 33 is sprinkled on the wetted mineral wool material 30 by means of a sprinkler device 34.

After draining, the wetted mineral wool material 30 is placed in a rotatable dryer 35 (also called a spin dryer) in step d). The rotatable dryer 35 comprises a drum 36 in which the wetted mineral wool 30 is placed, and by rotation of the drum 36, additional excess liquid 31' may be removed from the wetted mineral wool material 30.

The excess liquid 31; 31' removed from the wetted mineral wool material 30 in steps c) and/or d) may be collected and reused in step b).

In step e), the semi-dried mineral wool material 40 is moulded into a tile shaped element 1 and subsequent cured.

In the shown embodiment, the semi-dried mineral wool material 40 is moulded by being arranged in a mould 41 which comprises a bottom wall 42 and side walls 43 as well as a removable top wall 44. When the semi-dried mineral wool material 40 has been arranged inside the mould 41, the top wall 44 is placed on top and pressed down with a pressure P for obtaining a predetermined compression rate corresponding to a desired density of the final tile shape element 1.

A heater 45 is provided such that the curing may take place at an elevated temperature. The heater may be configured for heating by heat radiation R.

In step f) the tile shaped element 1 is removed from the mould 41. The tile shaped element 1 is removed from the mould 41 when the fully cured or at least partly cured.

It will be appreciated that the present invention is not limited to the embodiments shown. Several modifications and variations are thus conceivable within the scope of the invention which thus is exclusively defined by the appended claims.

## Claims

1. A method for recycling mineral wool material (10), comprising
fragmentizing the mineral wool material (10) for obtaining a fragmentised mineral wool material (20),
wetting the fragmentised mineral wool (20) material with a liquid (22) comprising alkaline activators for obtaining a wetted mineral wool material (30),
removing excess liquid (31; 31') from the wetted mineral wool material (30) for obtaining a semi-dried mineral wool material (40),
moulding the semi-dried mineral wool material (40) into a tile shaped element (1), and
curing the tile shaped element (1).

2. The method according to claim 1, wherein the mineral wool material (10) is obtained in the form of waste generated during manufacturing, installation and/or demounting after end of life of elements comprising mineral wool.

3. The method according to claim 1 or 2, wherein the mineral wool material (10) is fragmentized to fragments (21) of non-uniform shape and/or having an average piece size in the range of 10x10x10 mm to 50x50x50 mm.

4. The method according to any one of claims 1-3, wherein the step of wetting the fragmentised mineral wool material (20) is carried out in a wetting operation comprising immersion, spraying and/or tumbling.

5. The method according to any one of the preceding claims, wherein the liquid (22) comprising alkaline activators is an aqueous solution.

6. The method according to any one of the preceding claims, wherein the alkaline activators are selected from the group consisting of NaOH, Ca(OH)₂, KOH, Na_{2y}Si_{y}O_{2y+x}, K_{2y}Si_{y}O_{2y+x}.

7. The method according to any one of the preceding claims, wherein the step of removing excess liquid (31; 31') from the wetted mineral wool material (30) is carried out in an drying operation comprising draining, pressing, centrifugation, vacuum and/or heating.

8. The method according to any one of the preceding claims, further comprising adding metakaolin (33).

9. The method according to claim 8, wherein the metakaolin (33) is mixed with the liquid (22) comprising alkaline activators.

10. The method according to claim 8 or 9, wherein the metakaolin (33) is added to the fragmentised mineral wool material (20), to the wetted mineral wool material (30) and/or to the semi-dried mineral wool material (40).

11. The method according to any one of the preceding claims, wherein the step of moulding the semi-dried mineral wool material (40) comprises compacting the semi-dried mineral wool material (40) such that the tile shape element (1) obtains a density after curing in the range of 90- 400 kg/m³.

12. The method according to any one of the preceding claims, wherein the step of curing the tile shaped element (1) is performed at a temperature in the range of 20 - 80°C.

13. The method according to any one of the preceding claims, in which a mould (41) is used for performing the step of moulding the semi-dried mineral wool material (40).

14. The method according to any one of the preceding claims, wherein the step of moulding the semi-dried mineral wool material (40) comprises arranging a first layer (2) of a mixture comprising wood wool, milled mineral wool and an activated alkaline component in a mould (41), and subsequently arranging on top of the first layer (2) a second layer (3) comprising the semi-dried mineral wool material (40).

15. The method according to claim 14, wherein the milled mineral wool is obtained from recycled mineral wool material.

16. The method according to any one of the preceding claims, wherein the semi-dried mineral wool (40) material is subjected to fibre separation operation prior to the step of moulding the semi-dried mineral wool material (40).

## Patentansprüche

1. Verfahren zum Recyceln von Mineralwollmaterial (10), umfassend
Zerkleinern des Mineralwollmaterials (10), um ein zerkleinertes Mineralwollmaterial (20) zu erhalten,
Befeuchten des zerkleinerten Mineralwollmaterials (20) mit einer Flüssigkeit (22), die alkalische Aktivatoren umfasst, um ein befeuchtetes Mineralwollmaterial (30) zu erhalten,
Entfernen von überschüssiger Flüssigkeit (31; 31') aus dem befeuchteten Mineralwollmaterial (30), um ein halbtrockenes Mineralwollmaterial (40) zu erhalten,
Formen des halbtrockenen Mineralwollmaterials (40) zu einem plattenförmigen Element (1) und
Aushärten des plattenförmigen Elements (1).

2. Verfahren nach Anspruch 1, wobei das Mineralwollmaterial (10) in Form von Abfall erhalten wird, der bei Herstellung, Einbau und/oder Demontage nach Ablauf der Lebensdauer von Elementen entsteht, die Mineralwolle umfassen.

3. Verfahren nach Anspruch 1 oder 2, wobei das Mineralwollmaterial (10) in Fragmente (21) zerkleinert wird, die eine ungleichmäßige Form und/oder eine durchschnittliche Stückgröße in dem Bereich von 10×10×10 mm bis 50×50×50 mm aufweisen.

4. Verfahren nach einem der Ansprüche 1-3, wobei der Schritt des Befeuchtens des zerkleinerten Mineralwollmaterials (20) in einem Befeuchtungsvorgang ausgeführt wird, der ein Eintauchen, Besprühen und/oder Schleudern umfasst.

5. Verfahren nach einem der vorhergehenden Ansprüche, wobei die Flüssigkeit (22), die alkalische Aktivatoren umfasst, eine wässrige Lösung ist.

6. Verfahren nach einem der vorhergehenden Ansprüche, wobei die alkalischen Aktivatoren aus der Gruppe ausgewählt sind, die aus NaOH, Ca(OH)₂, KOH, Na_{2y}Si_{y}O_{2y+x} und K_{2y}Si_{y}O_{2y+x} besteht.

7. Verfahren nach einem der Ansprüche 1-3, wobei der Schritt des Entfernens von überschüssiger Flüssigkeit (31; 31') aus dem befeuchteten Mineralwollmaterial (30) in einem Trocknungsvorgang ausgeführt wird, der ein Abtropfen, Pressen, Zentrifugieren, Vakuumieren und/oder Erhitzen umfasst.

8. Verfahren nach einem der der vorhergehenden Ansprüche, ferner umfassend Hinzufügen von Metakaolin (33).

9. Verfahren nach Anspruch 8, wobei das Metakaolin (33) mit der Flüssigkeit (22), die alkalische Aktivatoren umfasst, vermischt wird.

10. Verfahren nach Anspruch 8 oder 9, wobei das Metakaolin (33) zu dem zerkleinerten Mineralwollmaterial (20), zu dem befeuchteten Mineralwollmaterial (30) und/oder zu dem halbtrockenen Mineralwollmaterial (40) hinzugefügt wird.

11. Verfahren nach einem der vorhergehenden Ansprüche, wobei der Schritt des Formens des halbtrockenen Mineralwollmaterials (40) ein Verdichten des halbtrockenen Mineralwollmaterials (40) umfasst, sodass das plattenförmige Element (1) nach dem Aushärten eine Dichte in dem Bereich von 90 bis 400 kg/m³ aufweist.

12. Verfahren nach einem der vorhergehenden Ansprüche, wobei der Schritt des Aushärtens des plattenförmigen Elements (1) bei einer Temperatur in dem Bereich von 20 bis 80 °C durchgeführt wird.

13. Verfahren nach einem der vorhergehenden Ansprüche, bei dem eine Form (41) verwendet wird, um den Schritt des Formens des halbtrockenen Mineralwollmaterials (40) durchzuführen.

14. Verfahren nach einem der vorhergehenden Ansprüche, wobei der Schritt des Formens des halbtrockenen Mineralwollmaterials (40) ein Anordnen einer ersten Schicht (2) einer Mischung, die Holzwolle, gemahlene Mineralwolle und eine aktivierte alkalische Komponente umfasst, in einer Form (41) und anschließend ein Anordnen einer zweiten Schicht (3), die das halbtrockene Mineralwollmaterial (40) umfasst, auf der ersten Schicht (2) umfasst.

15. Verfahren nach Anspruch 14, wobei die gemahlene Mineralwolle aus recyceltem Mineralwollmaterial erhalten wird.

16. Verfahren nach einem der vorhergehenden Ansprüche, wobei das halbtrockene Mineralwollmaterial (40) vor dem Schritt des Formens des halbtrockenen Mineralwollmaterials (40) einem Fasertrennvorgang unterzogen wird.

## Revendications

1. Procédé de recyclage de matériau de laine minérale (10), comprenant
la fragmentation du matériau de laine minérale (10) pour obtenir un matériau de laine minérale fragmenté (20),
le mouillage du matériau de laine minérale fragmenté (20) avec un liquide (22) comprenant des activateurs alcalins pour obtenir un matériau de laine minérale mouillée (30),
l'élimination de l'excès de liquide (31 ; 31') du matériau de laine minérale mouillée (30) pour l'obtention d'un matériau de laine minérale semi-séché (40),
le moulage du matériau de laine minérale semi-séché (40) en un élément en forme de tuile (1), et
le durcissement de l'élément en forme de tuile (1).

2. Procédé selon la revendication 1, dans lequel le matériau de laine minérale (10) est obtenu sous forme de déchets générés au cours de la fabrication, de l'installation et/ou du démontage après la fin de vie d'éléments comprenant de la laine minérale.

3. Procédé selon la revendication 1 ou 2, dans lequel le matériau de laine minérale (10) est fragmenté en fragments (21) de forme et/ou non uniforme ayant une taille de pièce moyenne de l'ordre de 10x10x10 mm à 50x50x50 mm.

4. Procédé selon l'une quelconque des revendications 1 à 3, dans lequel l'étape de mouillage du matériau fragmenté en laine minérale (20) est effectuée dans une opération de mouillage comprenant une immersion, une pulvérisation et/ou un polissage.

5. Procédé selon l'une quelconque des revendications précédentes, dans lequel le liquide (22) comprenant des activateurs alcalins est une solution aqueuse.

6. Procédé selon l'une quelconque des revendications précédentes, dans lequel les activateurs alcalins sont choisis dans le groupe constitué par NaOH, Ca(OH)₂,KOH, Na_{2y}Si_{y}O_{2y+x} et K_{2y}Si_{y}O_{2y+x}.

7. Procédé selon l'une quelconque des revendications précédentes, dans lequel l'étape d'élimination de l'excès de liquide (31 ; 31') du matériau de laine minérale mouillée (30) est effectuée dans une opération de séchage comprenant un égouttage,un pressage, une centrifugation, une mise sous vide et/ou un chauffage.

8. Procédé selon l'une quelconque des revendications précédentes, comprenant en outre l'ajout de métakaolin (33).

9. Procédé selon la revendication 8, dans lequel le métakaolin (33) est mélangé au liquide (22) comprenant des activateurs alcalins.

10. Procédé selon la revendication 8 ou 9, dans lequel le métakaolin (33) est ajouté au matériau de laine minérale fragmenté (20), au matériau de laine minérale mouillé (30) et/ou au matériau de laine minérale semi-séché (40).

11. Procédé selon l'une quelconque des revendications précédentes, dans lequel l'étape de moulage du matériau de laine minérale semi-séché (40) comprend le compactage du matériau de laine minérale semi-séché (40) de sorte que l'élément en forme de tuile (1) obtienne une densité après durcissement comprise entre 90 et 400 kg/m³.

12. Procédé selon l'une quelconque des revendications précédentes, dans lequel l'étape de durcissement de l'élément en forme de tuile (1) est effectuée à une température dans la plage de 20 à 80°C.

13. Procédé selon l'une quelconque des revendications précédentes, dans lequel un moule (41) est utilisé pour réaliser l'étape de moulage du matériau de laine minérale semi-séché (40).

14. Procédé selon l'une quelconque des revendications précédentes, dans lequel l'étape de moulage du matériau de laine minérale semi-séché (40) comprend la disposition d'une première couche (2) d'un mélange comprenant de la laine de bois, un matériau de laine minérale broyé et un composant alcalin activé dans un moule (41), et ensuite la disposition sur le dessus de la première couche (2) d'une seconde couche (3) comprenant le matériau de laine minérale semi-séché (40).

15. Procédé selon la revendication 14, dans lequel la laine minérale broyée est obtenue à partir de matériau de laine minérale recyclé.

16. Procédé selon l'une quelconque des revendications précédentes, dans lequel la laine minérale semi-séchée (40) est soumise à une opération de séparation des fibres préalable à l'étape de moulage du matériau de laine minérale semi-séché (40).
